# EUROPÄISCHE PATENTANMELDUNG

(11) **EP 1 048 935 A2**
(43) Veröffentlichungstag der Anmeldung: **02.11.2000**
(21) Anmeldenummer: 00108667.7
(22) Anmeldetag: 20.04.2000
(51) Int. Cl.: G01F 1/684

(54) **Strömungssensor**

(30) Priorität: 28.04.1999 DE 29907566 U
(71) Anmelder: HONSBERG & CO. KG, D-42897 Remscheid (DE)
(72) Erfinder: Bisek, Reimund, 42579 Heiligenhaus (DE)
(74) Vertreter: Manitz, Finsterwald & Partner

(57) **Zusammenfassung**

Die Erfindung betrifft einen Strömungssensor mit einem Gehäuse, in dem zumindest zwei Temperaturfühler und zumindest ein Heizelement angeordnet sind. Die Erfindung ist dadurch gekennzeichnet, daß die beiden Temperaturfühler direkt an der Innenwandung des Gehäuses verlötet, verklebt oder auf die Innenwandung aufgeschrumpft sind.

## Beschreibung

Die vorliegende Erfindung betrifft einen Strömungssensor mit einem Gehäuse, in dem zumindest zwei Temperaturfühler und zumindest ein Heizelement angeordnet sind.

Derartige Strömungssensoren sind grundsätzlich bekannt. Bei diesen Sensoren ist zumeist einer der Temperaturfühler beheizt und der andere Temperaturfühler mißt die über das Strömungsmedium übertragene Wärmemenge, wodurch auf die Strömungsgeschwindigkeit zurückgeschlossen werden kann.

Es ist auch grundsätzlich bekannt, bei derartigen Sensoren die Temperaturfühler auf Trägern zu montieren und diese über ein elastisches Element an die Innenwandung des Gehäuses zu drücken oder von vorneherein einen elastischen Träger vorzusehen. Dies ist jedoch insofern nachteilig, als der Wärmeübergang zwischen der Gehäusewand und den Temperaturfühlern nur unzureichend und nicht ausreichend definiert ist.

Es ist die Aufgabe der vorliegenden Erfindung, einen Strömungssensor der eingangs genannten Art zu schaffen, der eine erhöhte Sensitivität aufweist.

Die Lösung dieser Aufgabe erfolgt durch die Merkmale des Anspruchs 1 und insbesondere dadurch, daß die beiden Temperaturfühler direkt an der Innenwandung des Gehäuses verlötet, verklebt oder auf die Innenwandung aufgeschrumpft sind. Die Erfindung beruht auf der Erkenntnis, daß eine ganz erhebliche Verbesserung der Sensitivität und Genauigkeit eines Strömungssensors erzielt werden kann, wenn die Temperaturfühler unmittelbar an der Innenwandung des Gehäuses befestigt sind.

Vorteilhafte Ausführungsformen der Erfindung sind in der Beschreibung, der Zeichnung sowie in den Unteransprüchen beschrieben.

Nach einer ersten vorteilhaften Ausführungsform können die Temperaturfühler in Dünnfilm- oder in Dickfilmtechnik auf einem Basismaterial aus AL₂O₃ hergestellt sein. Hierdurch lassen sich besonders platzsparende Temperaturfühler herstellen, die je nach Anforderung ausgebildet werden können.

Bevorzugt ist eine Heizstruktur des Heizelementes und eine temperatursensitive Struktur des Temperaturfühlers parallel zueinander und mäanderförmig verlaufend auf einer Basisstruktur aufgebracht. Hierdurch ist ein Bauelement geschaffen, bei dem Temperaturfühler und Heizelement auf einer Basisstruktur vereinigt sind, ohne daß hierdurch Lötvorgänge oder dergleichen erforderlich werden. Aufgrund der mäanderförmigen Ausbildung kann das Bauelement besonders platzsparend hergestellt werden.

Bevorzugt ist auf einer Seite des Heizelementes und/oder des Temperaturfühlers eine lötfähige Beschichtung aufgebracht, so daß diese Bauelemente unmittelbar auf die Innenwandung des Gehäuses aufgelötet werden können. Die sensitiven Strukturen des Bauelementes können auf der anderen Seite der Basisstruktur aufgebracht sein, so daß eine elektrische Isolierung der Innenwandung des Gehäuses nicht erforderlich ist.

Ferner ist es vorteilhaft, wenn in dem Gehäuse eine Platine vorgesehen ist, auf der einerseits ein Anschlußkabel und andererseits Anschlußdrähte der Temperaturfühler und/oder des Heizelementes verlötet sind. Hierbei kann es sich um eine Platine aus flexiblem oder starrem Material handeln. Bevorzugt wird dabei die Platine in das Gehäuseinnere eingeführt, das anschließend mit einem wärmeisolierenden Schaummaterial verfüllt wird, welches gleichzeitig die Platine in ihrer Position hält.

Das Gehäuse des Strömungssensors ist vorzugsweise stiftförmig ausgebildet und kann in seinem Inneren einen hohlzylindrischen Innenraum aufweisen und an seinem vorderen Ende konisch oder konkav ausgebildet sein. Hierbei sind die Temperaturfühler vorzugsweise in dem konischen oder konkaven Bereich an diametral einander gegenüberliegenden Positionen befestigt. Nach einer weiteren Ausbildung der Erfindung kann zwischen den Temperaturfühlern im Scheitelpunkt des konischen oder konkaven Bereiches ein Heizelement angeordnet sein, das ebenfalls an der Innenwandung des Gehäuses verlötet oder verklebt ist.

Es ist vorteilhaft, wenn das Gehäuse aus mehreren Einzelbauteilen hergestellt ist, da hierdurch die Fertigung des Strömungssensors erleichtert ist. Beispielsweise kann das Gehäuse einen Sensorkopf, einen Verlängerungszylinder und ein Befestigungsteil aufweisen, die nach der Montage der Temperaturfühler und des Heizelementes miteinander verschraubt oder anderweitig aneinander befestigt werden.

Nach einer weiteren vorteilhaften Ausbildung der Erfindung ist der Temperaturfühler und/oder das Heizelement auf einem ringförmigen Substrat aufgebracht. Dieses Substrat kann anschließend im Innenraum des Gehäuses verlötet oder im Gehäuseinneren aufgeschrumpft werden, wodurch ein Strömungssensor zur Verfügung steht, der völlig rotationssymmetrisch arbeitet. Auch kann es vorteilhaft sein, das ringförmige Substrat mit einer Platine zu binden, die sich durch die Öffnung des Substrates hindurcherstreckt. Hierbei kann es erforderlich sein, das Gehäuseinnere zumindest teilweise elektrisch zu isolieren.

Eine besonders klein bauende Ausführungsform eines Strömungssensors kann dadurch erhalten werden, daß das Gehäuse als Kanüle ausgebildet ist, wobei die Temperaturfühler jeweils auf einem flächigen Substrat angeordnet sind und die Substrate in dem Gehäuse hintereinander, beabstandet und um 90° zueinander versetzt angeordnet sind. Durch eine solche Bauweise können Strömungssensoren mit sehr geringem Durchmesser gefertigt werden.

Es ist vorteilhaft, wenn die Temperaturfühler gleichzeitig als Heizelement verwendet werden, um den Ort, an dem die Temperaturerfassung erfolgt, gleich dem Ort zu machen, an dem die Wärmeenergie zugeführt wird. Für eine Richtungsbestimmung des strömenden Mediums kann ein wechselseitiges Heizen erfolgen.

Die Temperaturfühler und das Heizelement können aus Widerstandselementen gebildet sein, die in Dickfilm- oder Dünnfilmtechnik hergestellt sind. Es können hierbei Platin- oder Nickelwiderstände, PTC-Pasten, jedoch auch Halbleitermaterialien verwendet werden.

Die Temperaturfühler und das Heizelement können mit einer Hilfsvorrichtung in das Gehäuseinnere eingeführt werden, die nach dem Verkleben oder Verlöten der Bauteile wieder entfernt wird.

Sofern mehr als zwei Temperaturfühler oder Heizelemente in der gleichen Strömungsebene angeordnet werden, kann eine Richtungsbestimmung des Strömungsmediums auch ohne ein Ausrichten des Strömungssensors im Strömungsraum erfolgen. Sofern ein zusätzliches, zentrales Heizelement zwischen zwei Temperaturfühlern vorgesehen wird, läßt sich zu der Temperaturdifferenz zwischen einem beheizten und einem unbeheizten Temperaturfühler eine alternative Meßmethode anwenden, bei der die Wärmeverteilung der abgegebenen Wänneleistung des zentralen Heizelementes von den umliegenden Temperaturfühlern gemessen wird. Die sich ergebenden Unterschiede führen zu einem proportionalen Bild hinsichtlich der Strömungsrichtung und hinsichtlich der Wärmeverteilung, die wiederum proportional zur Fließgeschwindigkeit des Strömungsmediums ist.

Die Wärmeverteilung läßt sich auch dadurch ermitteln, daß einzelne Temperaturfühler als Heizelemente betrieben werden. Die Wärmeleistung wird durch Addieren einer Heizspannung oder eines Heizstromes zur Fühlerspannung oder zum Fühlerstrom erzeugt. Legt man hierbei eine Schaltmatrix zwischen Heizspannung oder Heizstrom und Fühlerstrom oder Fühlerspannung zwischen den Bauteilen und einem A/D-Wandler eines Mikrokontrollers an, so kann eine beliebige Kombination zwischen Beheizen und Messen der Einzelelemente erzeugt werden. Hierbei können die Heizleistungen durch eine Pulsweitenmodulation mit Hilfe des Mikrokontrollers erhöht oder erniedrigt werden. Hierbei ist es auch möglich, zwischen der Konstantheizmethode und der Nachregelung einer konstanten Differenztemperatur auszuwählen. Eventuelle Streuungen zwischen einzelnen Bauteilen können durch den Mikrokontroller in einer Referenzmessung durch Korrekturwerte korrigiert werden. Auch ist es möglich, mindestens ein digitales Potentiometer vorzusehen, das durch den Mikrokontroller gesteuert wird und einen Brückenabgleich vornimmt.

Eine kegelförmige oder konische Ausbildung der Außenfläche des stiftförmigen Sensors ist insofern von Vorteil, als die Verschmutzung im Bereich des Kegels geringer ist als auf einer Zylinderfläche. Faserartige Verschmutzungen können am Zylinder hängenbleiben und dadurch den Wärmetransport beeinflussen. Auch ist es möglich, daß auf einer planaren Stimseite Sedimente abgelagert werden, die durch die geringe abrasive Kraft der Flüssigkeit nicht entfernt werden können. Derartige Nachteile ergeben sich nicht bei Verwendung einer konischen oder kegelförmigen Außenkontur eines Strömungssensors.

Nachfolgend wird die vorliegende Erfindung rein beispielhaft anhand vorteilhafter Ausführungsformen und unter Bezugnahme auf die beigefügten Zeichnungen beschreiben. Es zeigen:
- Fig. 1: eine Schnittansicht eines Strömungssensors;
- Fig. 2: eine Schnittansicht einer weiteren Ausführungsform eines Strömungssensors;
- Fig. 3: eine Querschnittsansicht einer weiteren Ausführungsform eines Strömungssensors;
- Fig. 4: eine Schnittansicht einer weiteren Ausführungsform eines Strömungssensors;
- Fig. 5: eine Anordnung einer temperatursensitiven Struktur sowie einer Heizstruktur;
- Fig. 6: eine Schnittansicht einer weiteren Ausführungsform eines Strömungssensors;
- Fig. 7: eine Querschnittsansicht durch den Sensor von Fig. 6;
- Fig. 8A: eine Schnittansicht einer weiteren Ausführungsform eines Strömungssensors;
- Fig. 8B: eine Querschnittsansicht des Strömungssensors von Fig. 8A;
- Fig. 8C: die Detailvergrößerung C von Fig. 8A;
- Fig. 9A: eine Schnittansicht einer weiteren Ausführungsform eines Strömungssensors;
- Fig. 9B: eine Querschnittsansicht des Sensors von Fig. 9A;
- Fig. 10A: eine Schnittansicht einer weiteren Ausführungsform eines Strömungssensors;
- Fig. 10B: eine Querschnittsansicht des Strömungssensors von Fig. 10A;
und
- Fig. 11-13: verschiedene Schaltungsanordnungen zur Ansteuerung eines Strömungssensors;

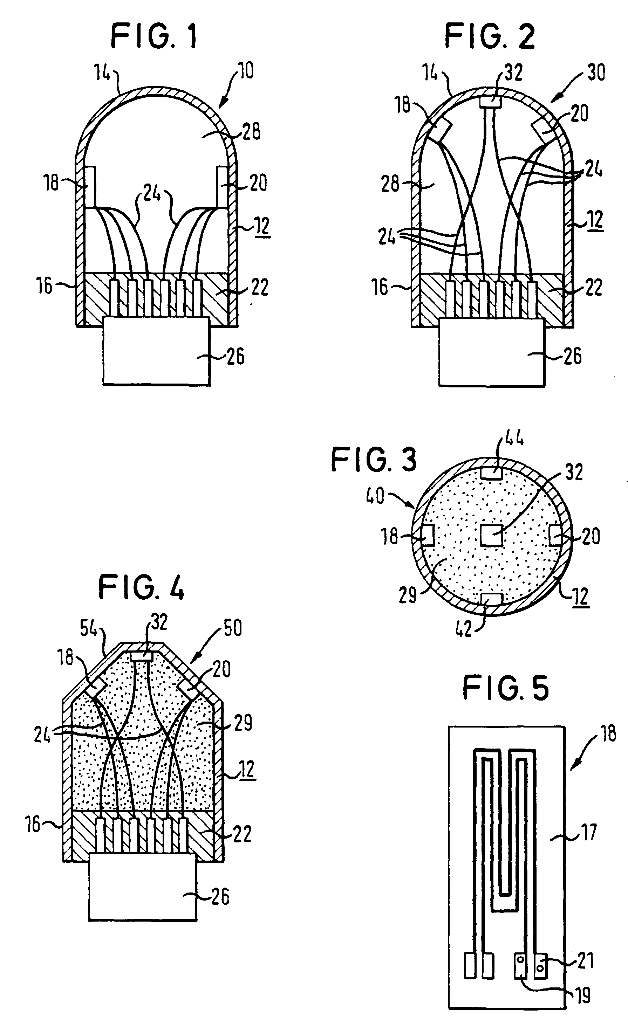

Fig. 1 zeigt eine Schnittansicht eines ersten Strömungssensors 10, der ein Metallgehäuse 12 aufweist, das stiftförmig ausgebildet ist. Das Gehäuse 12 ist an seinem vorderen, geschlossenen Ende halbkugelförmig ausgebildet, d.h. dieses weist einen halbkugelförmigen Abschnitt 14 und einen rohrförmigen Abschnitt 16 auf, die einstückig miteinander verbunden sind und stufenlos ineinander übergehen.

Im Inneren des Gehäuses sind zwei Sensorelemente 18, 20 vorgesehen, die an diametral gegenüberliegenden Stellen am vorderen Ende des rohrförmigen Abschnittes 16 an der Innenwandung des Gehäuses 12 verklebt sind. Jedes Sensorelement 18, 20 weist eine temperatursensitive Struktur sowie eine Heizstruktur auf.

Am hinteren offenen Ende des Gehäuses 12 ist eine Platine 22 vorgesehen, auf der einerseits die Anschlußdrähte 24 der Sensorelemente 18, 20 und andererseits ein Anschlußkabel 26 verlötet sind, welches im dargestellten Ausführungsbeispiel als Flachbandkabel ausgebildet ist.

Der gesamte Innenraum 28 des Strömungssensors 10 ist mit einem schlecht wärmeleitenden Füllstoff, beispielsweise geschlossenporigem Schaum, Kunstharz oder dergleichen verfüllt, um den Zwischenraum zwischen den Sensorelementen 18, 20 teilweise oder völlig auszufüllen und dadurch einen Wärmetransport zwischen den beiden Sensorelementen 18, 20 zu minimieren.

Die Platine 22 kann entweder durch Eingießen des Füllstoffes in den Innenraum 28 befestigt werden. Alternativ ist es möglich, diese an der Innenwandung zu verkleben oder zu verlöten. Auch können alternativ die Sensorelemente 18, 20 an der Innenwandung verlötet werden. In diesem Fall weisen die Sensorelemente auf der einen Seite die temperatursensitive Struktur bzw. die Heizstruktur und an der anderen Seite eine lötfähige Beschichtung (Metallisierung) auf.

Fig. 2 zeigt eine weitere Ausführungsform eines Strömungssensors 30, wobei für sinngemäße und gleiche Bauteile gleiche Bezugszeichen verwendet werden und die Beschreibung dieser Bauteile zur Vermeidung von Wiederholungen weggelassen wird. Bei dieser Ausführungsform sind die Sensorelemente 18, 20 auf gleicher Höhe an diametral gegenüberliegenden Stellen des Gehäuses 12 in dem halbkugelförmigen Abschnitt 14 verlötet, und es ist zusätzlich ein weiteres Sensorelement 32 vorgesehen, das im Inneren des Gehäuses 12 im Scheitelpunkt des halbkugelförmigen Abschnittes 14 verlötet ist. Das weitere Sensorelement 32 weist ebenfalls eine temperatursensitive Struktur sowie eine Heizstruktur auf. Die Anschlußdrähte 24 des Sensorelementes 32 sind wiederum auf der Platine 22 verlötet.

Fig. 3 zeigt einen Querschnitt durch eine weitere Ausführungsform eines Strömungssensors 40. Diese Ausführungsform entspricht im wesentlichen derjenigen von Fig. 1, wobei jedoch zusätzlich zu den Sensorelementen 18 und 20 zwei weitere Sensorelemente 42, 44 vorgesehen sind, die auf der gleichen Höhe des Gehäuses 12 an diametral gegenüberliegenden Stellen verklebt sind. Im Inneren 28 des Gehäuses 12 ist wie bei dem Ausführungsbeispiel von Fig. 2 im Scheitelpunkt des halbkugelförmigen Abschnittes 14 ein weiteres Sensorelement 32 verklebt. Wie Fig. 3 zeigt, liegen die Sensorelemente 18, 20 und 42, 44 im Querschnitt gesehen auf zwei sich rechtwinklig kreuzenden Geraden, wobei das Sensorelement 32 im Kreuzungspunkt angeordnet ist.

Fig. 4 zeigt eine weitere Ausführungsform eines Strömungssensors 50, die im wesentlichen derjenigen von Fig. 2 entspricht, wobei jedoch am Gehäuse 12 anstelle des halbkugelförmigen Abschnittes 14 ein konischer Abschnitt 54 vorgesehen ist, der einstückig in den rohrförmigen Abschnitt 16 übergeht. Die beiden Sensorelemente 18, 20 sind ähnlich wie bei Fig. 2 an diametral gegenüberliegenden Stellen im Inneren des Gehäuses 12 an der Gehäusewandung auf gleicher Höhe des Gehäuses verlötet. Im inneren Scheitelpunkt des Gehäuses 12 ist ein weiterer Sensor 32 verlötet, der somit konzentrisch zur Mittelachse des Sensors und symmetrisch zu den beiden Sensorelementen 18 und 20 angeordnet ist.

In den Fig. 3 und 4 ist im Gegensatz zu den Fig. 1 und 2 Füllmaterial 29 dargestellt, das als Wärmeisolator dient und das in das Gehäuseinnere eingegossen, eingesteckt oder eingefüllt werden kann.

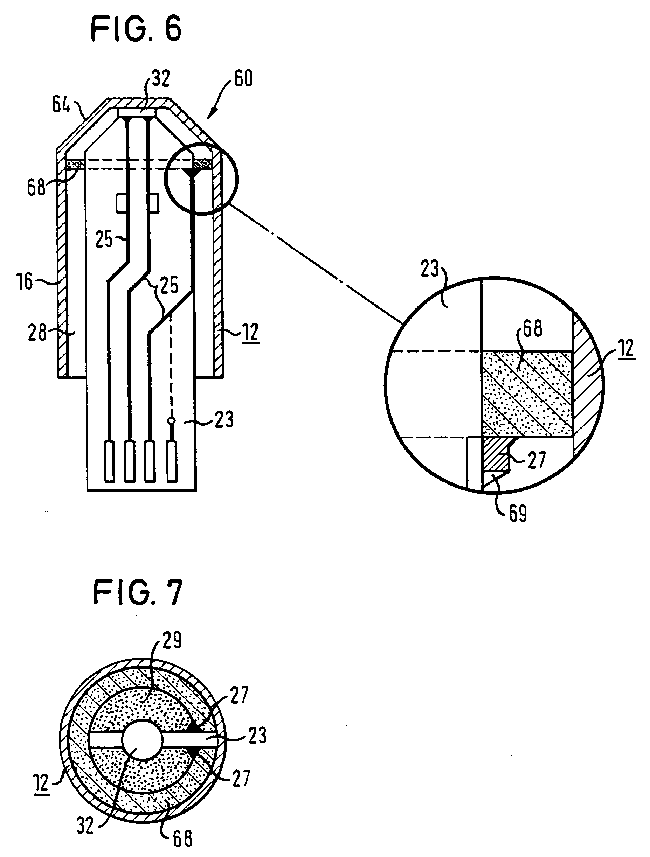

Fig. 5 zeigt beispielhaft für sämtliche dargestellten Sensorelemente eine Draufsicht auf das Sensorelement 18, das einen Grundkörper 17 aus AL₂O₃ aufweist, der in Draufsicht rechteckig ausgebildet ist und auf dem in Dünnfilm- oder Dickfilmtechnik eine temperatursensitive Struktur 19 und eine Heizstruktur 21 aufgebracht sind. Die temperatursensitive Struktur 19 und die Heizstruktur 21 verlaufen zueinander parallel und sind mäanderförmig auf dem Grundkörper 17 aufgebracht. Selbstverständlich handelt es sich bei Fig. 5 um eine stark vergrößerte Darstellung. In Wirklichkeit betragen die Abmessungen des Grundkörpers 17 nur einige wenige Millimeter.

Die Fig. 6 und 7 zeigen eine weitere Ausführungsform eines Strömungssensors 60, bei dem das Gehäuse 12 wiederum aus einem rohrförmigen Abschnitt 16 und einem konischen Abschnitt 64 gebildet ist. Verglichen mit der Ausführungsform von Fig. 4 ist allerdings der rohrförmige Abschnitt 16 axial länger ausgebildet. Bei dieser Ausführungsform ist im Inneren des Gehäuses 12 im Scheitelpunkt ein Sensorelement 32 verlötet, wie dies auch bei der Ausführungsform nach Fig. 4 der Fall ist. Das zweite Sensorelement ist jedoch bei dieser Ausführungsform als Ringkörper 68 ausgebildet, der im rohrförmigen Abschnitt kurz vor dem Übergang zu dem konischen Abschnitt an der Gehäuseinnenwandung verklebt ist. Alternativ kann der Ring aufgeschrumpft, verlötet oder verschweißt werden, wobei im Falle einer metallischen Ausbildung des Gehäuses für eine Isolierung zwischen der Gehäusewandung und den sensitiven Abschnitten des Sensorelementes gesorgt werden muß. Bei dem dargestellten Ausführungsbeispiel ist die in Fig. 7 sichtbare Seitenfläche des Ringkörpers 68, der aus Keramikmaterial besteht, mit einer temperaturabhängigen Widerstandsbeschichtung versehen, die an ihrem Außenumfang einen Isolierabstand zur Innenwand des Gehäuses aufweist.

Die Kontaktierung der Sensorelemente 32 und 68 erfolgt über eine in das Innere des Sensorelementes 60 eingesteckte Platine 23, die am offenen Ende des Sensorelementes aus dem Gehäuse 12 vorsteht und die am dazu entgegengesetzten Ende an die konische Innenform des konischen Abschnittes 64 angepaßt ist. Die Platine 23 ermöglicht eine Kontaktierung des Sensorelementes 32 sowie des als Sensorelement dienenden Ringkörpers 68 über Leiterbahnen 25, die über Lötpunkte 27 kontaktiert sind. Wie der vergrößerte Ausschnitt in Fig. 6 zeigt, kann die Platine 23 einen Vorsprung 69 aufweisen, auf dem ein Lötpunkt 27 angeordnet werden kann.

Auch bei dieser Ausführungsform ist der Innenraum 28 des Sensorelementes 60 mit einem Füllstoff/ Füllmaterial 29 ausgefüllt.

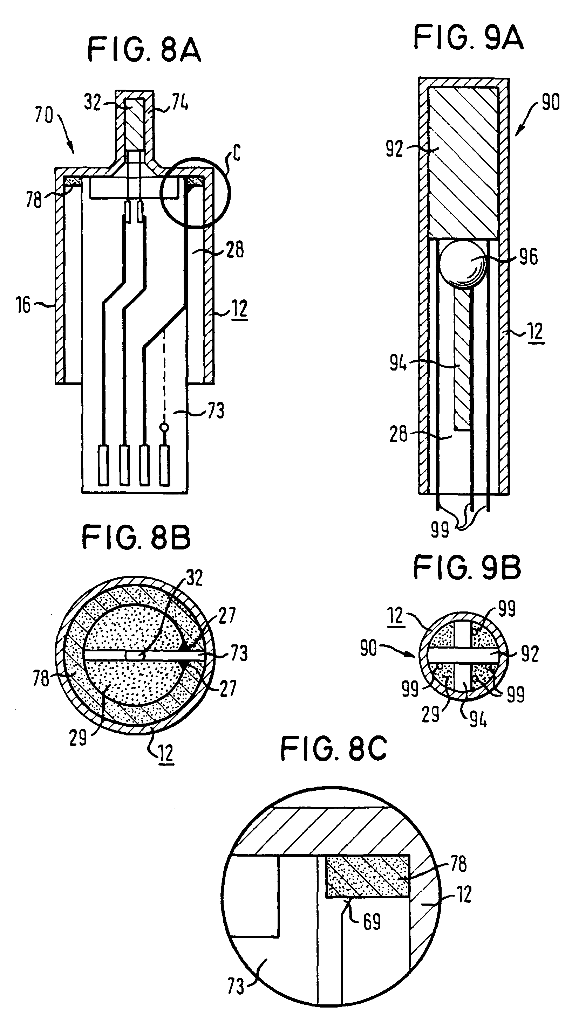

Fig. 8A zeigt eine weitere Ausführungsform eines Strömungssensors 70, der ähnlich zu der in Fig. 6 dargestellten Ausführungsform ausgebildet ist, jedoch besteht das Gehäuse 12 des Strömungssensors 70 aus einem rohrförmigen Abschnitt 16, an dem sich ein weiterer rohrförmiger Abschnitt 74 anschließt, der einen wesentlich geringeren Durchmesser als der rohrförmige Abschnitt 16 aufweist. Somit ist durch den rohrförmigen Abschnitt 74 ein stiftförmiger Fortsatz gebildet, der sich symmetrisch entlang der Mittenachse des rotationssymmetrischen Strömungssensors 70 erstreckt.

Bei dieser Ausführungsform ist ein Strömungssensor 32 in dem stiftförmigen Fortsatz des rohrförmigen Abschnittes 74 verlötet. Ein zweiter Strömungssensor ist durch einen Ringkörper 78 aus Keramik gebildet, der im Inneren des Gehäuses 12 am vorderen Ende des rohrförmigen Abschnitts 16 verlötet, verklebt oder aufgeschrumpft ist. Auf den Ringkörper 78 ist wie bei der Ausführungsform von Fig. 6 und 7 eine temperatursensitive Beschichtung aufgebracht.

Fig. 8A zeigt zudem, daß auch bei dieser Ausführungsform eine Platine 73 in das Innere des Strömungssensors 70 eingesteckt ist, um Kontaktierungen zu den Strömungssensoren 32 und 78 herzustellen. Bei dieser Ausführungsform besitzt die Platine im wesentlichen Rechteckform, wobei zur Kontaktierung des Ringkörpers 78 wiederum ein Vorsprung 69 vorgesehen ist (vgl. Fig. 8C), um Lötpunkte 27 (vgl. Fig. 8B) zu setzen. Auch bei dieser Ausführungsform ist der Innenraum 28 des Strömungssensors 70 mit einem Füllmaterial 29 versehen.

Die Fig. 9A und 9B zeigen einen weiteren Strömungssensor 90, der einen extrem kleinen Aufbau in einer druckdichten Kapselung ermöglicht. Bei dieser Ausführungsform ist das Gehäuse 12 aus einem zylinderförmigen Körper gebildet, der kanülenartig ausgebildet ist, d.h. dessen Länge ist wesentlich größer (im dargestellten Ausführungsbeispiel etwa um den Faktor 5) als dessen Durchmesser. In dem rein zylinderförmigen Gehäuse 12 ist im Bereich des geschlossenen Endes ein erstes Sensorelement 92 angeordnet, das in Draufsicht rechteckig ausgebildet ist und das sich über den gesamten Innenquerschnitt des Gehäuses 12 erstreckt. Das Sensorelement kann aufgeschrumpft, geklebt oder gelötet sein.

Ein zweites Sensorelement 94 ist mit Abstand zu dem ersten Sensorelement 92 im Gehäuseinneren angeordnet und um 90° versetzt orientiert, wie sich aus den Fig. 9A und 9B ergibt. Als Abstandhalter zwischen den beiden Sensorelementen 92 und 94 ist im dargestellten Ausführungsbeispiel eine Glaskugel 96 vorgesehen. Es eignen sich jedoch auch andere Materialien, die eine schlechte Wärmeleitung aufweisen, beispielsweise PU-Schaum oder dergleichen. Der Innenraum 28 des Gehäuses 12 ist auch hier mit einem Füllmaterial 29 verschlossen, um unerwünschte thermische Strömungen auszuschließen.

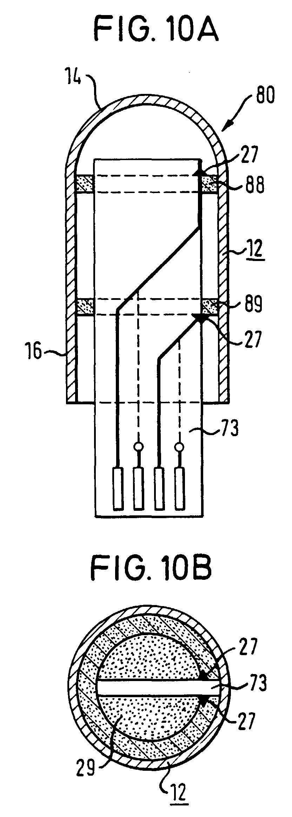

Die Fig. 10A und 10B zeigen eine weitere Ausführungsform eines Strömungssensors, bei dem das Gehäuse 12 ähnlich zu dem Gehäuse von Fig. 1 ausgebildet ist und aus einem rohrförmigen Abschnitt 16 sowie einem halbkugelförmigen Abschnitt 14 besteht. Bei diesem Strömungssensor sind im Inneren des rohrförmigen Abschnittes 16 zwei beabstandete Ringkörper 88 und 89 vorgesehen, die auf die Innenwandung des Gehäuses 12 aufgeschrumpft sind. Beide Ringkörper 88, 89 bestehen aus Keramik und sind an einer ihrer Seitenflächen mit einer temperaturabhängigen Widerstandsbeschichtung versehen, die zum Gehäuse einen Isolationsabstand aufweist. Die gegenüberliegende Seitenfläche ist mit einer Heizstruktur versehen. Die Kontaktierung dieser Beschichtungen erfolgt wiederum über Lötpunkte 27, die eine Verbindung zu der Leiterplatte 73 herstellen, die in das Innere des Strömungssensors 80 und durch die Ringkörper 88, 89 geführt ist.

Der in den Fig. 10A und 10B dargestellte Strömungssensor 80 besitzt zwar den Nachteil, daß dessen Sensorelemente nicht im identischen Strömungsprofil liegen. Jedoch ist bei dieser Ausführungsform, wie auch bei den Ausführungsformen nach den Fig. 6 bis 9, eine nahezu vollkommene Symmetrie gegenüber der Rotationsachse vorhanden, was für den Einbau der Sensoren mit einem Gewindestutzen nützlich ist, da keine Vorzugsrichtung beachtet werden muß.

Die beschriebenen erfindungsgemäßen Sensorelemente sind sämtlich so ausgebildet, daß in einem kalorimetrischen Einstiftsystem ein Optimum erreicht wird hinsichtlich eines bestmöglichen Wärmekontaktes der Sensorelemente mit dem Strömungsmedium, einer optimierten Isolierung der Sensorelemente untereinander und einer Optimierung hinsichtlich der Lage der Sensorelemente im gleichen Berührungsprofil des Fluids. Schließlich sind auch Selbst- oder Fremdreinigungseffekte der Fühlergeometrie im Bereich der Sensoren berücksichtigt. Die Sensorelemente der erfindungsgemäßen Strömungssensoren liegen auf einer kegelförmigen oder runden Innenwandung in einem größtmöglichen Abstand zueinander und vorzugsweise in der gleichen Strömungsebene. Sie sind an der Innenwandung elektrisch isoliert und zur Wandung gut wärmeleitend angeklebt, angelötet (verschweißt) und durch einen Wärmeisolator, beispielsweise PU-Schaum oder eingesteckter, vorgeformter, geschlossenporiger Schaum, voneinander isoliert, um Wärmezirkulationen im Inneren des Fühlers zu vermeiden. Als Material für die Platine findet vorzugsweise ein Trägermaterial mit geringem Masseanteil Verwendung. Das Einführen der Sensorelemente kann durch ein Hilfswerkzeug erfolgen, das nach dem Befestigen der Sensorelemente an dem Gehäuse wieder entfernt wird.

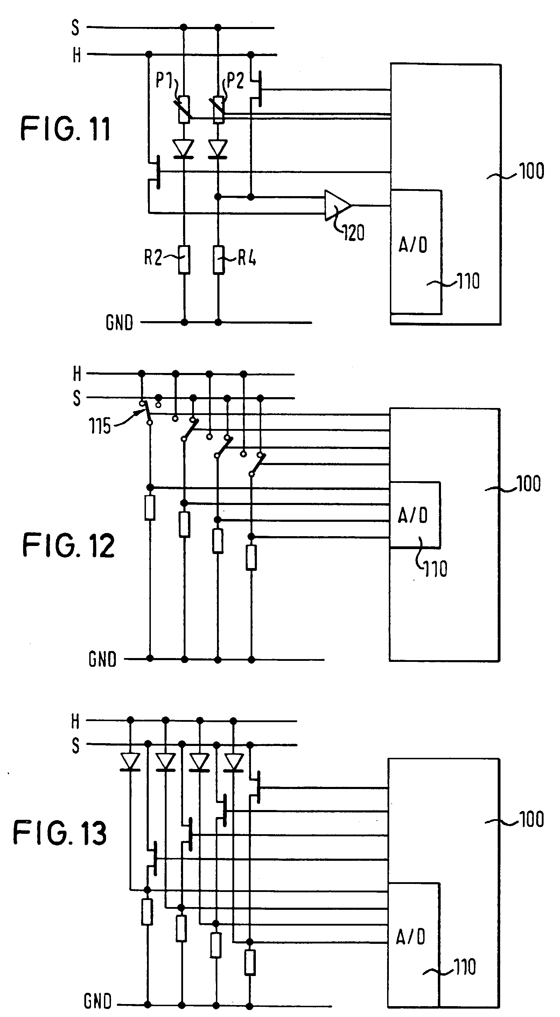

In den Fig. 11 bis 13 sind verschiedene Schaltungsanordnungen gezeigt, die im Zusammenhang mit Strömungssensoren Verwendung finden können. Grundsätzlich sind in jedem Strömungssensor mindestens zwei temperatursensitive Elemente sowie mindestens ein Heizelement angeordnet. Werden mehr als zwei Sensor- und Heizelemente in der gleichen Strömungsebene angeordnet, so kann eine Richtungsbestimmung der Flüssigkeit auch ohne ein Ausrichten des Sensors im Strömungsraum erfolgen.

Ist ein zusätzlicher zentraler Sensor (Sensorelement 32) vorgesehen, so läßt sich zu der Temperaturdifferenz zwischen einem beheizten und einem unbeheizten Sensorelement eine alternative Meßmethode anwenden, die eine Ergänzung der oben genannten Methode darstellt. Bei dieser alternativen Methode kann die Wärmeverteilung der abgegebenen Wärmeleistung des zentralen Sensorelementes von den umliegenden temperatursensitiven Sensorelementen aufgenommen werden. Die sich ergebenden Unterschiede ergeben ein proportionales Bild zur Strömungsrichtung und Wärmeverteilung, die proportional zur Fließgeschwindigkeit des Meßstoffes ist. Die Wärmeverteilung läßt sich auch über ein Umschalten der einzelnen Sensorelemente zu Heizelementen ermitteln. Fig. 13 zeigt eine Schaltungsanordnung, bei der ein Mikrokontroller 100 mit einem A/D-Wandler 110 vorgesehen ist. Die Wärmeleistung kann hier durch Addieren einer Heizspannung oder eines Heizstromes H zu einer Sensorspannung oder einem Sensorstrom S ermittelt werden.

Fig. 12 zeigt eine ähnliche Anordnung, bei der jedoch zwischen der Heizspannung (oder dem Heizstrom H) und der Sensorspannung bzw. dem Sensorstrom S und dem A/D-Wandler 110 des Mikrokontrollers 100 eine Schaltmatrix 115 eingebracht ist. Hierdurch kann eine beliebige Kombination zwischen Beheizen und Messen der einzelnen Sensorelemente erzeugt werden. Die Heizleistung kann dabei im Rahmen einer Pulsheizung durch Pulsweitenmodulation mit Hilfe des Mikrokontrollers 100 erhöht und erniedrigt werden. Hierbei kann zwischen der Konstantheizmethode und der Nachregelung einer konstanten Differenztemperatur gewählt werden. Die Bauteilestreuungen können durch den Mikrokontroller 110 in einer Referenzmessung durch Korrekturwerte korrigiert werden.

Fig. 11 zeigt ein Ausführungsbeispiel, bei dem zumindest ein digitales Potentiometer durch den Mikrokontroller 100 gesteuert einen Brückenabgleich vornehmen kann. Hierbei sind die Brückenzweige P1 und P2 abgleichbar. Die Bauelemente R2 und R4 sind die Meß- und wahlweise Heizelemente des Fühlers. Das Bezugszeichen 120 bezeichnet einen Differenzverstärker.

### Bezugszeichenliste

- 10: Strömungssensor
- 12: Gehäuse
- 14: halbkugelförmiger Abschnitt
- 16: rohrförmiger Abschnitt
- 17: Grundkörper
- 18: Sensorelement
- 19: temperatursensitive Struktur
- 20: Sensorelement
- 21: Heizstruktur
- 22, 23: Platine
- 24: Anschlußdrähte
- 25: Leiterbahnen
- 26: Flachbandkabel
- 27: Lötpunkt
- 28: Innenraum
- 29: Füllmaterial
- 30: Strömungssensor
- 32: Sensorelement
- 40: Strömungssensor
- 42, 44: Sensorelement
- 50: Strömungssensor
- 54: konischer Abschnitt
- 60: Strömungssensor
- 64: konischer Abschnitt
- 68: Ringkörper
- 70: Strömungssensor
- 73: Platine
- 74: rohrförmiger Abschnitt
- 78: Ringkörper
- 80: Strömungssensor
- 88, 89: Ringkörper
- 90: Strömungssensor
- 92, 94: Sensorelement
- 96: Abstandshalter
- 100: Mikrokontroller
- 110: A/D-Wandler
- 115: Schaltmatrix
- 120: Differenzverstärker
- H: Heizstrom/Heizspannung
- S: Sensorstrom/Sensorspannung

## Patentansprüche

1. Strömungssensor mit einem Gehäuse (12), in dem zumindest zwei Temperaturfühler (18, 20, 32, 42, 44, 88, 89, 92, 94) und zumindest ein Heizelement (18, 20, 32, 42, 44, 92, 94) angeordnet sind,
dadurch **gekennzeichnet**, daß
die beiden Temperaturfühler direkt an der Innenwandung des Gehäuses (12) verlötet, verklebt oder auf die Innenwandung aufgeschrumpft sind.

2. Strömungssensor nach Anspruch 1,
dadurch **gekennzeichnet,** daß
die Temperaturfühler in Dünnfilm- oder in Dickfilmtechnik auf einem Basismaterial (17) aus Al₂O₃ hergestellt sind.

3. Strömungssensor nach Anspruch 1 oder 2,
dadurch **gekennzeichnet**, daß
eine Heizstruktur (21) des Heizelementes und ein temperatursensitive Struktur (19) des Temperaturfühlers parallel zueinander und mäanderförmig verlaufend auf einer Basisstruktur (17) aufgebracht sind.

4. Strömungssensor nach zumindest einem der vorstehenden Ansprüche,
dadurch **gekennzeichnet**, daß
auf einer Seite des Heizelementes und/oder des Temperaturfühlers eine lötfähige Beschichtung aufgebracht ist.

5. Strömungssensor nach zumindest einem der vorstehenden Ansprüche,
dadurch **gekennzeichnet,** daß
die beiden Temperaturfühler diametral im Inneren des Gehäuses (12) angeordnet sind.

6. Strömungssensor nach zumindest einem der vorstehenden Ansprüche,
dadurch **gekennzeichnet,** daß
der Innenraum (28) des Gehäuses (12) mit einem Wärmeisolator (29) verfüllt ist.

7. Strömungssensor nach zumindest einem der vorstehenden Ansprüche,
dadurch **gekennzeichnet,** daß
in dem Gehäuse eine Platine (22, 23, 73) vorgesehen ist, auf der einerseits ein Anschlußkabel (26) und andererseits Anschlußdrähte (24) der Temperaturfühler und/oder des Heizelementes verlötet sind

8. Strömungssensor nach zumindest einem der vorstehenden Ansprüche,
dadurch **gekennzeichnet,** daß
das Gehäuse (12) stiftförmig ausgebildet und zumindest in seinem Inneren an seinem vorderen Ende konisch oder konkav ausgebildet ist, wobei die Temperaturfühler vorzugsweise im konischen oder konkaven Bereich befestigt sind.

9. Strömungssensor nach zumindest einem der vorstehenden Ansprüche,
dadurch **gekennzeichnet,** daß
das Gehäuse (12) stiftförmig ausgebildet und zumindest in seinem Inneren an seinem vorderen Ende konisch oder konkav ausgebildet ist, wobei vorzugsweise das Heizelement (32) im Scheitelpunkt des konischen oder konkaven Bereiches befestigt ist.

10. Strömungssensor nach zumindest einem der vorstehenden Ansprüche,
dadurch **gekennzeichnet,** daß
das Gehäuse (12) einen Sensorkopf, einen Verlängerungszylinder und vorzugsweise ein Befestigungsteil aufweist.

11. Strömungssensor nach zumindest einem der vorstehenden Ansprüche,
dadurch **gekennzeichnet,** daß
der Temperaturfühler und/oder das Heizelement auf ein ringförmiges Substrat (68, 78) aufgebracht sind.

12. Strömungssensor nach zumindest einem der vorstehenden Ansprüche,
dadurch **gekennzeichnet,** daß
der Temperaturfühler und/oder das Heizelement auf einem ringförmigen Substrat aufgebracht sind, wobei das Substrat mit einer Platine (23, 73) verlötet ist, die sich durch die Öffnung des Substrates hindurch erstreckt.

13. Strömungssensor nach zumindest einem der vorstehenden Ansprüche,
dadurch **gekennzeichnet,** daß
das Gehäuse (12) aus Metall besteht und das Gehäuseinnere zumindest teilweise elektrisch isoliert ist.

14. Strömungssensor nach zumindest einem der vorstehenden Ansprüche,
dadurch **gekennzeichnet,** daß
das Gehäuse (12) an seinem vorderen Ende einen stiftförmigen Fortsatz (74) aufweist, in dessen Innerem ein Temperaturfühler (32) angeordnet ist.

15. Strömungssensor nach zumindest einem der vorstehenden Ansprüche,
dadurch **gekennzeichnet,** daß
die Temperaturfühler jeweils auf einem flächigen Substrat (92, 94) angeordnet sind, wobei die Substrate in dem Gehäuse hintereinander, beabstandet und um 90° versetzt zueinander angeordnet sind.

16. Strömungssensor nach zumindest einem der vorstehenden Ansprüche,
dadurch **gekennzeichnet,** daß
das Gehäuse als Kanüle (12) ausgebildet ist.

17. Strömungssensor nach zumindest einem der vorstehenden Ansprüche,
dadurch **gekennzeichnet,** daß
ein Heizelement (32) symmetrisch zwischen den beiden Temperaturfühlern in dem Gehäuse (12) angeordnet ist, wobei zumindest ein Temperaturfühler ein weiteres Heizelement aufweist.

18. Strömungssensor nach zumindest einem der vorstehenden Ansprüche,
dadurch **gekennzeichnet,** daß
dieser an eine Steuerung (100) angeschlossen ist, mit welcher die Temperaturfühler mit einer Heizspannung oder einem Heizstrom beaufschlagbar sind.

19. Strömungssensor nach zumindest einem der vorstehenden Ansprüche,
dadurch **gekennzeichnet**, daß
mit der Steuerung (100) Heizströme, Heizspannungen und Fühlerspannungen meßbar sind.
